# EUROPÄISCHE PATENTSCHRIFT

(11) **EP 3 519 711 B1**
(45) Veröffentlichungstag und Bekanntmachung des Hinweises auf die Patenterteilung: **02.09.2020**
(21) Anmeldenummer: 17794211.7
(22) Anmeldetag: 27.09.2017
(51) Int. Cl.: F16C 23/04, F16C 33/12, F16C 33/14

(54) **MEHRSCHICHTGLEITLAGERELEMENT**
MULTILAYER PLAIN BEARING ELEMENT
ÉLÉMENT DE PALIER LISSE MULTICOUCHE

(30) Priorität: 27.09.2016 AT 508622016
(43) Veröffentlichungstag der Anmeldung: 07.08.2019
(73) Patentinhaber: Miba Gleitlager Austria GmbH, 4663 Laakirchen (AT)
(72) Erfinder: ZIDAR, Jakob, 4813 Altmünster (AT)
(74) Vertreter: Burger, Hannes
(86) Internationale Anmeldenummer: PCT/AT2017/060240
(87) Internationale Veröffentlichungsnummer: WO 2018/058163

(56) Entgegenhaltungen:
- DE-A1- 4 103 116
- DE-A1- 19 852 481
- DE-B3-102011 077 278

## Beschreibung

Die Erfindung betrifft ein Mehrschichtgleitlagerelement umfassend eine Stützschicht und zumindest eine Gleitschicht, wobei die Gleitschicht in einer Umfangsrichtung verlaufende Kanten und eine Schichtdicke in radialer Richtung aufweist, wobei weiter die Schichtdicke der Gleitschicht im Bereich zumindest einer der Kanten kleiner ist als in einem Bereich neben diesem Bereich, und die Gleitschicht zumindest als Hauptbestandteil aus einer metallischen Legierung besteht, die ein erstes, eine Matrix bildendes Element und zumindest ein zweites Element aufweist.

Weiter betrifft die Erfindung ein Verfahren zur Herstellung eines Mehrschichtgleitlagers umfassend zumindest eine Stützschicht und eine Gleitschicht, wobei die Gleitschicht in einer Umfangsrichtung verlaufende Kanten und eine Schichtdicke in radialer Richtung aufweist, wobei weiter die Schichtdicke der Gleitschicht im Bereich zumindest einer der Kanten kleiner hergestellt wird als in einem Bereich neben den Kanten.

Die Abflachung der in Umfangsrichtung verlaufenden Seitenkanten von Gleitlagerschalen ist aus dem Stand der Technik bereits bekannt. Als ein Beispiel von vielen sei die DE 102 08 118 B4 genannt. Mit dieser speziellen Formgebung, auch Dachkante oder Blended Edge genannt, sollen der Abriss eines Ölfilms und eine Überbelastung des Gleitlagers im Seitenkantenbereich vermieden werden.

Aus der DE 10 2011 077 278 B3 ist ein Verfahren bekannt, bei dem die geradlinige Bewegung des Lagerschalenrohlings der Bewegung der Bohrspindel in einer speziellen Art überlagert wird, wodurch eine Gleitschicht mit balliger Oberfläche erhalten wird.

Neben der spanenden Bearbeitung der Seitenkanten, beispielsweise durch maschinelles Feinbohren oder manuelles Abschleifen mit einem Bandschleifgerät, sind auch Prägeverfahren zur Herstellung eines Schichtdickenverlaufs bekannt.

Die DE 41 03 116 A1 beschreibt ein Gleitelement mit einer 10 µm bis 100 µm dicken Gleitschicht aus ternärer oder binärer Legierung von Metallen mit guten Gleiteigenschaften aus einer Gruppe von Blei, Zinn, Antimon, Indium, Thallium sowie Kupfer, Cadmium, Arsen, wobei sich die Legierungszusammensetzung der Gleitschicht von ihrer die Gleitfläche bildenden Oberfläche nach dem Schichtinneren ändert, und hinsichtlich eines oder mehrerer in die ternäre oder binäre Legierung der Gleitschicht eindiffundierbaren Legierungsbestandteile aus weichem Metall der Untergruppe Zinn, Antimon, Indium, Thallium kontinuierlich mit einem Konzentrationsgradienten senkrecht zur Gleitfläche ändert, und zwar ausgehend von einer dem reinen eindiffundierbaren Metall entsprechenden Maximalkonzentration im Bereich der Gleitfläche exponentiell abfallend bis zur asymptotischen Annäherung an eine vorher festgelegte Mindestkonzentration dieses Legierungsbestandteiles in einem vorher festgelegten Tiefenbereich innerhalb der Gleitschicht.

Die DE 198 52 481 A1 beschreibt ein Verfahren zur Herstellung eines Schichtverbundwerkstoffes für Gleitelemente, bei dem auf eine Trägerschicht eine Lagermetallschicht sowie eine Zwischenschicht aufgebracht wird und auf der Zwischenschicht eine Gleitschicht galvanisch abgeschieden wird, wobei als Gleitschicht eine bleifreie Legierung mit mindestens einer harten und einer weichen Komponente abgeschieden wird, wobei die Stromdichte innerhalb des Bereichs von 0,3 bis 20 A/dm² während des Abscheidevorgangs verändert wird und/oder die Temperatur des Galvanikbades innerhalb des Bereiches von 15°C bis 80°C verändert wird.

In der Galvanotechnik können zur Herstellung eines Schichtdickenverlaufs Blenden, Hilfselektroden oder speziell geformte Anoden verwendet werden.

Alleine die Vermeidung einer an der Kante stark ansteigenden Schichtdicke bedarf eines erheblichen Aufwandes. Die Verwendung von Pulsstrom und Revers-Pulsstrom, sowie einebnende Additiven und entsprechende Werkstückgestaltung sind dafür Stand der Technik.

Galvanische Abscheidungen tendieren nämlich üblicherweise dazu an Kanten höhere Schichtdicken aufzutragen, da sich dort die elektrischen Feldlinien konzentrieren und zu höheren lokalen Stromdichten führen.

Abgesehen davon, dass diese Verfahren aufwändig sind, sind sie teilweise auch schwierig zu reproduzieren. Beim Feinbohren werden die Gleitlager üblicherweise mit speziellen Lehrbändern im Bereich der Seitenkanten unterlegt. Die manuelle Bearbeitung der Seitenkanten unterliegt der menschlichen Fehleranfälligkeit.

Galvanotechnische Lösungen erfordern Bauteil gebundene Werkzeuge oder Einzelbeschichtungen, die die Wirtschaftlichkeit der Gleitlagerherstellung nachteilig beeinflussen. Folglich wird eine geringfügige Erhöhung der Schichtdicke (1 µm bis 10 µm) zur Kante in aller Regel als unvermeidbar hingenommen oder sogar als vorteilhaft beschrieben (WO2014/104002 A1).

Die Aufgabe der Erfindung ist die Bereitstellung eines Mehrschichtgleitlagerelementes mit einer in einem Teilbereich schichtdickenreduzierten Gleitschicht.

Die Aufgabe wird bei dem eingangs genannten Mehrschichtgleitlagerelement dadurch gelöst, dass das zweite Element mit einem in axialer Richtung verlaufenden Konzentrationsgradienten enthalten ist, wobei der Anteil des zweiten Elementes in der Legierung in Richtung auf die Kante zunimmt und wobei das zweite Element ein kleineres Stromäquivalent als das erste, die Matrix bildende Element und/oder wobei das zweite Element oder daraus gebildete intermetallische Phasen eine höhere Dichte hat/haben, als das erste, die Matrix bildende Element.

Die Aufgabe der Erfindung wird auch mit dem eingangs genannten Verfahren gelöst, wonach vorgesehen ist, dass die Gleitschicht als metallische Legierung mit einem ersten, eine Matrix bildendem Element und zumindest einem zweiten Element aus einem Galvanikbad galvanisch abgeschieden wird, und dass das zweite Element mit einem in einer Axialrichtung verlaufenden Konzentrationsgradienten mit zunehmendem Anteil des zweiten Elementes in der Legierung in Richtung auf die Kante abgeschieden wird, und wobei als zweites Element ein Element mit im Vergleich zum ersten Element kleinerem Stromäquivalent eingesetzt wird und/oder wobei als zweites Element ein Element eingesetzt wird, das oder dessen daraus gebildete intermetallische Phasen eine höhere Dichte hat/haben, als das erste Element.

Das Stromäquivalent ist dabei jene Menge an einem Element, die mit einer bestimmten Strommenge innerhalb einer bestimmten Zeit abgeschieden werden kann. Strommenge und Zeit müssen dabei für die betrachteten Elemente gleich sein.

Die Dichte bezieht sich jeweils auf das Reinelement bzw. die gebildeten intermetallischen Phasen (jeweils bei gleicher Temperatur).

Von Vorteil ist dabei, dass mit dem Konzentrationsgradienten an dem zweiten Element eine Änderung in der Abscheidemenge bei galvanischer Abscheidung der Gleitschicht und/oder eine Änderung des Volumens der abgeschiedenen Legierung (verglichen mit der Abscheidung ohne Konzentrationsgradient und bei gleicher Strommenge, also gleicher Menge an elektrischer Energie) bewirkt wird. Dies wiederum führt zu der gewünschten Reduktion der Schichtdicke. Es wird also mit der Erfindung bei der Herstellung des Mehrschichtgleitlagerelementes ein Konzentrationsgradient in einen geometrischen Gradienten, nämlich den Schichtdickenverlauf der Gleitschicht, umgesetzt. Das Verfahren zur Herstellung des Mehrschichtgleitlagerelementes ist damit einfach durchzuführen. Darüber hinaus kann mit dem höheren Anteil des zweiten Elementes im Kantenbereich eine Veränderung der mechanischen Eigenschaften dieses Bereiches erreicht werden. Eine Aufhärtung kann der Überlastung dieses Bereichs im Betrieb des Mehrschichtgleitlagerelementes ebenfalls entgegenwirken, eine Aufweichung erleichtert hingegen eine weitere Anpassung und bedarf so nur einem Teilausgleich des betrieblichen Anpassungsbedarfs.

Vorzugsweise ist das zweite Element elektrochemisch edler als das erste Element, wobei sich der Begriff "edler" nicht auf die Normalpotenziale bezieht, sondern auf die tatsächlichen Abscheidepotenziale (gegebenenfalls auch der entsprechenden intermetallischen Phasen) im galvanischen Prozess. Solche edleren Elemente scheiden sich üblicherweise z.B. bei niedrigeren Strom dichten oder geringerer Diffusionsschichtdicke (z.B. stärkerer Rührung) in einer höheren Konzentration ab.

Bevorzugt sind das erste Element Zinn und das zweite Element Kupfer. Zinn wird aus sauren Elektrolyten mit ca. 0,62 mg/As und einer Dichte von ca. 7,3 g/cm³ abgeschieden. Kupfer wird hingegen aus solchen Elektrolyten mit ca. 0,33 mg/As und einer Dichte von ca. 8,5 g/cm³ (als Cu6Sn5-Phase mit etwa 40 % Kupfer). Es kann also mit der gleichen Menge an Ladung nur etwa die halbe Menge an Kupfer und dieses mit einer höheren Dichte, also geringerem Volumen abgeschieden werden. Damit ist eine weitere Verbesserung der voranstehend genannten Effekte erzielbar.

Nach einer bevorzugten Ausführungsvariante des Mehrschichtgleitlagerelementes im System Zinn-Kupfer kann vorgesehen sein, dass der Anteil an Kupfer im Bereich der Kante um mindestens 2 Gew.-% höher ist, als der durchschnittliche Anteil dieses Elementes in der Gleitschicht. Es können damit die voranstehend genannten Effekte weiter verstärkt werden. Es können damit Überlastbereiche des Mehrschichtgleitlagers besser vermieden und damit dessen Betriebssicherheit weiter verbessert werden.

Andererseits kann es von Vorteil sein, wenn der Anteil an Kupfer im System Zinn-Kupfer im Bereich der Kante maximal 30 Gew.-% beträgt. Einerseits kann damit eine unregelmäßige Oberfläche, insbesondere eine zu hohe Oberflächenrauigkeit, vermieden werden, andererseits kann damit die Ausbildung eines zu harten und extrem spröden Kantenbereichs vermieden werden, der zwar in Hinblick auf dessen Belastbarkeit von Vorteil wäre, aber die gesamttribologischen Eigenschaften der Gleitschicht negativ beeinflussen kann. Bei Übersteigen des Kupfergehalts im Kantenbereich von 35 Gew.-% werden die dann kaum mehr zinn-gebundenen intermetallischen-Phasen (Cu6Sn5) extrem spröde.

Der durchschnittliche Kupfergehalt liegt bevorzugt im Bereich von 7 Gew.-% bis 20 Gew.-%, insbesondere im Bereich von 10 Gew.-% bis 15 Gew.-%. Dadurch kann eine Erhöhung an der Kante um 2 Gew.-% einfacher bewerkstelligt werden.

Gemäß einer anderen Ausführungsvariante kann das erste Element aus Zinn und das zweite Element aus Bismut bestehen. Bismut wird aus sauren Elektrolyten mit ca. 0,72 mg/As und einer Dichte von ca. 9,8 g/cm³ abgeschieden. Zinn wird aus sauren Elektrolyten mit ca. 0,62 mg/As und einer Dichte von ca. 7,3 g/cm³ abgeschieden. Da sowohl Zinn als auch Bismut weich sind und gute tribologische Eigenschaften aufweisen, kann ein Schichtdickenabfall zur Kante hin bei relativ konstanter Festigkeit und Tribologie realisiert werden.

Nach einer bevorzugten Ausführungsvariante im System Zinn-Bismut besteht die Beschichtung durchschnittlich (also über die gesamte Beschichtung betrachtet) aus etwa 3 Gew.-% bis 10 Gew.-% Bismut, wobei ein Anstieg an der Kante um mindestens 2 Gew.-% auf höchstens 15 Gew.-% besonders vorteilhaft ist. Gehalte über 15 Gew.-% Bismut können niedrig schmelzend sein und sogar ein Eutektikum von 139 °C formen. Solche Zusammensetzungen können sich als nachteilig auf die Festigkeit bei erhöhter Temperatur auswirken.

Gemäß einer anderen Ausführungsvariante kann das erste Element aus Zinn und das zweite Element aus Antimon bestehen. Antimon wird aus sauren Elektrolyten mit ca. 0,42 mg/As und einer Dichte von ca. 6,9 g/cm³ (als SnSb-intermetallische Phase) abgeschieden. Zinn wird aus sauren Elektrolyten mit ca. 0,62 mg/As und einer Dichte von ca. 7,3 g/cm³ abgeschieden. Die geringere Dichte der intermetallischen Phase wird vom Effekt der niedrigeren Stromausbeute leicht überwogen. SnSb-Phasen erhöhen die Festigkeit und Temperaturbeständigkeit der Zinnlegierung und weisen gute tribologische Eigenschaften auf.

Als besonders bevorzugte Ausführungsvariante im System Zinn-Antimon besteht die Beschichtung durchschnittlich (also über die gesamte Beschichtung betrachtet) aus 2 Gew.-% bis 20 Gew.-% Antimon, wobei im Kantenbereich eine Zunahme um mindestens 5 Gew.-% auf maximal 40 Gew.-% bevorzugt wird.

Als weitere bevorzugte Ausführungsvariante werden Zinn, Bismut und/oder Antimon und/oder Kupfer kombiniert. Dabei ist bevorzugt, wenn der Höchstgehalt von Bismut 15 Gew.-% im ungebundenen Anteil des Zinns an der Legierung, also jenen Anteil, der nicht in intermetallischen Cu6Sn5-Phasen oder SnSb-Phasen gebunden ist, aus voranstehend genannten Gründen nicht übersteigt. Durch diese Kombination können die an sich positiven Eigenschaften von Antimon verstärkt werden, indem die Schichtdickenabnahme zur Kante vorwiegend durch eine Zunahme des Kupfergehaltes eingestellt werden kann. Die Schichtdickenabnahme ist somit nicht vom wesentlich geringeren Schichtdickeneffekt des Antimons abhängig, der Antimongehalt muss also nicht übermäßig zur Kante hin ansteigen.

Gemäß einer anderen Ausführungsvariante kann das erste Element aus Zink und das zweite Element aus Zinn bestehen. Zinn wird aus cyanidischen Elektrolyten mit ca. 0,31 mg/As und einer Dichte von ca. 7,3 g/cm³ abgeschieden. Zink wird hingegen aus solchen Elektrolyten mit ca. 0,34 mg/As und einer Dichte von ca. 7,1 g/cm³ abgeschieden.

Als besonders bevorzugte Ausführungsvariante im System Zink-Zinn weist die Beschichtung durchschnittlich (also über die gesamte Beschichtung betrachtet) etwa 10 Gew.-% bis 30 Gew.-% Zink auf. Dadurch wird die weiche Zinn-Matrix durch Zink korrosions- und verschleißfester. Wiederum ist vorteilhaft, wenn der Zinn-Anteil zur Kante um mindestens 2 Gew.-%, noch bevorzugter 5 Gew.-%, ansteigt. Der Zinn-Anstieg zur Kante führt dabei zu einer geometrischen Anpassung durch reduzierte Schichtdicke bei gleichzeitiger Aufweichung und damit verbesserter Tribologie und mechanischer Anpassungsfähigkeit.

Es ist dabei möglich, durch zusätzlichen Einsatz von Legierungselementen, wie Kupfer, Nickel und/oder Kobalt (je ca. 0,3 mg/As für Co und Ni, bzw. 0,66 mg/As für Cu bei einer Dichte von ca. 8 g/cm³ als Zn-Cu-Phasen) die Festigkeit der kantenfernen Bereiche (speziell bei Nickel und Kobalt, da weniger edel) oder die Festigkeit der Kantenbereiche (speziell Kupfer, da besonders edel) anzuheben bzw. gezielt einzustellen.

Der Vollständigkeit halber ist anzumerken, dass bei einer Abscheidung des Zinn-Zink Systems aus einem stark alkalischen, cyanidischen Elektrolyten die Bedingungen anders als in herkömmlichen sauren Elektrolyten sind. Zink ist in diesen Elektrolyten cyanidisch komplexiert und Zinn (hier als Sn⁴⁺, nicht wie im Sauren als Sn²⁺) wird nur mit einer Stromausbeute von ca. 0,3 mg/As aus sehr starken Hydroxy-Komplexen abgeschieden wobei von der Badzusammensetzung (freien Alkalität) abhängt, ob Zinn überhaupt edler als Zink ist. Ebenso kann sich in diesen Elektrolyten Kupfer (in Form des starken Cyanid-Komplexes) unedler darstellen als Zinn, wird aber mit einer Stromausbeute von 0,66 mg/As (Cu⁺ nicht Cu²⁺) abgeschieden.

Gemäß einer anderen Ausführungsvariante kann das erste Element aus Silber und das zweite Element aus Blei bestehen. Silber wird aus cyanidischen Elektrolyten mit 1,12 mg/As und einer Dichte von ca. 10,5 g/cm³ abgeschieden. Blei wird hingegen aus solchen Elektrolyten mit nur ca. 1,07 mg/As und einer Dichte von ca. 11,3 g/cm³ abgeschieden.

Durch den extrem starken Silber-Cyanid-Komplex wird Blei bevorzugt abgeschieden, verhält sich also edler als Silber - trotz des wesentlich edleren Verhaltens von Silber in Bezug auf die Normalpotenziale (Ag: +0,80 V vs. Pb: -0,13V). Der Elektrolyt ist dabei insbesondere so zusammengesetzt, dass die freie Cyanid-Konzentration hoch ist (starke Silber-Komplexierung) während die freie Alkalität niedrig ist (relativ geringe Pb-Komplexierung).

Als besonders bevorzugte Ausführungsvariante im System Silber-Blei besteht die Beschichtung durchschnittlich (also über die gesamte Beschichtung betrachtet) aus etwa 5 Gew.-% bis 40 Gew.-% Blei. Wiederum ist vorteilhaft, wenn der Blei-Anteil zur Kante um mindestens 2 Gew.-%, noch bevorzugter 10 Gew.-%, ansteigt, aber einen Wert von 60 Gew-% nicht übersteigt. Durch den geringeren Effekt der Dichte und des elektrochemischen Äquivalents ist zur Erzielung der gewünschten Schichtdickenabnahme eine relativ starke Zunahme des Bleigehaltes an der Kante vorteilhaft.

Gemäß einer anderen Ausführungsvariante kann das erste Element aus Silber und das zweite Element aus Bismut bestehen. Silber wird aus cyanidischen Elektrolyten mit 1,12 mg/As und einer Dichte von ca. 10,5 g/cm³ abgeschieden. Bismut wird hingegen aus solchen Elektrolyten mit nur ca. 0,72 mg/As und einer Dichte von ca. 9,8 g/cm³ abgeschieden. Es sei dazu auf die voranstehenden Ausführungen zum Zinn-Zink-System verwiesen, wobei der entgegengesetzte Effekt der geringeren Dichte durch den stärkeren Effekt des elektrochemischen Äquivalents überwogen wird.

Nur der Vollständigkeit halber sei erwähnt, dass gerade cyanidische oder nahezu neutrale Systeme mitunter bei nicht vollständiger coulometrischer Stromausbeute abscheiden, dass also Nebenreaktionen (z.B. Gasentwicklung) einen nicht vernachlässigbaren Teilstrom umsetzen. In manchen Fällen steigt die Stromausbeute mit sinkender Stromdichte. Es kann also zu einer Abschwächung in anderen Fällen zu einer Verstärkung des gewünschten Effektes führen. Bei stark sauren Elektrolyten oder z.B. Silberelektrolyten allgemein ist dieser Esinfluss vernachlässigbar.

Selbstverständlich können in allen oben genannten Beispielen weitere Legierungselemente oder Partikel zugesetzt sein, die keinen nennenswerten Effekt auf die Schichtdickenabnahme zur Kante bewirken aber andere positive Wirkungen (z.B. Glanz und Einebnung, Korngrenzen-, Verscheiß- oder Ermüdungsfestigkeit) hervorrufen.

Gemäß einer weiteren Ausführungsvariante kann vorgesehen sein, dass auf der Gleitschicht eine weitere Schicht angeordnet ist, die einen Anteil an dem zweiten Element aufweist, der geringer ist, als der durchschnittliche Anteil dieses Elementes in der Gleitschicht. Es können damit die tribologischen Eigenschaften des Mehrschichtgleitlagers verbessert werden, da der Anteil an aufhärtendem Element geringer ist als in der Gleitschicht. Somit kann der Anteil an diesem Element, d.h. dem zweiten Element in der Gleitschicht erhöht werden, wodurch ebenfalls eine Verbesserung der voranstehend genannten Effekte erreichbar ist. Es ist somit beispielsweise möglich eine erste Zinn-Kupfer-Schicht mit hohem Kupfer-Gradienten (starkem Anstieg des Kupfergehaltes zur Kante) und entsprechend starker Schichtdickenabnahme und Aufhärtung mit einer weichen, anpassungsfähigen Zinnbasis-Einlaufschicht ohne erheblichen Gradienten zu kombinieren, wobei die erste Schicht für die geometrische Formgebung und die zweite für gute tribologische Eigenschaften sorgt.

Der Vollständigkeit halber sei darauf hingewiesen, dass die Gleitschicht auch aus mehreren unterschiedlich zusammengesetzten Teilgleitschichten aufgebaut sein kann, die jeweils den genannten Effekt erreichen.

Es ist dabei aber auch möglich, dass sich diese zusätzliche Schicht erst im Betrieb durch Austausch von Elementen in Folge von Diffusion aufbaut, wobei die weitere Schicht aufgehärtet und die Gleitschicht weicher wird, bzw. dass sich die Schichten im Betrieb durch Diffusion austauschen und die Kupfergehalte angeglichen werden.

Gemäß Ausführungsvarianten des Verfahrens kann vorgesehen sein,
- dass das Galvanikbad während der Abscheidung der Elemente mit einer oszillierenden Bewegung senkrecht auf die zu beschichtende Oberfläche bewegt wird,
- dass die oszillierende Bewegung mit einer Höhe durchgeführt wird, die dem 0,1- bis 3-fachen der beabsichtigten Länge des Bereichs mit reduzierter Schichtdicke entspricht,
- dass die oszillierende Bewegung mit einer Frequenz von mehr als 0,5 Hz durchgeführt wird,
- dass mehrere Mehrschichtgleitlager in einem Galvanikbad gleichzeitig hergestellt werden, wobei zwischen den Rohlingen für die Mehrschichtgleitlager Distanzelemente angeordnet werden

Es kann mit jeder dieser Ausführungsvarianten oder mit einzelnen Kombinationen daraus der Konzentrationsgradient für das zweite Element einfacher hergestellt werden.

Zum besseren Verständnis der Erfindung wird diese anhand der nachfolgenden Figuren näher erläutert.

Es zeigen in vereinfachter, schematischer Darstellung:
- Fig. 1: ein Mehrschichtgleitlagerelement in Seitenansicht;
- Fig. 2: ein Mehrschichtgleitlager im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

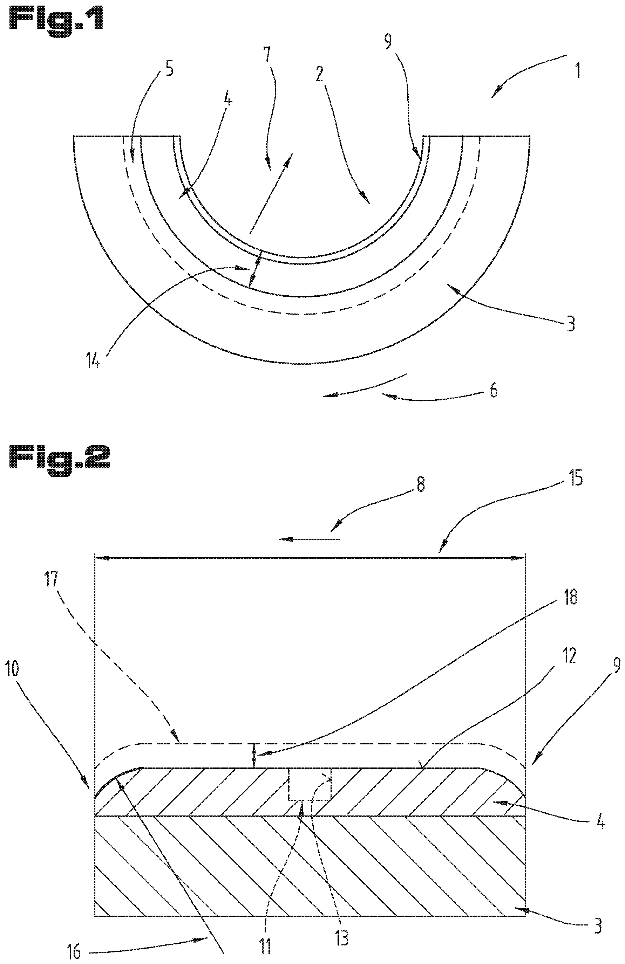

In den Fig. 1 und 2 ist ein metallisches Mehrschichtgleitlagerelement 1, insbesondere ein Radialgleitlagerelement, in Seitenansicht dargestellt. Dieses weist einen Gleitlagerelementkörper 2 auf. Der Gleitlagerelementkörper 2 umfasst eine Stützschicht 3 und zumindest eine darauf angeordnete Gleitschicht 4 bzw. besteht aus der Stützschicht 3 und der damit direkt verbundenen Gleitschicht 4.

Wie in Fig. 1 strichliert angedeutet zu ersehen ist, kann der Gleitlagerelementkörper 2 auch zusätzliche Schichten aufweisen, beispielsweise eine Zwischenschicht 5, die zwischen der Gleitschicht 4 und der Stützschicht 3 angeordnet ist. Die Zwischenschicht 5 kann beispielsweise eine Diffusionssperrschicht oder eine Bindeschicht oder eine Lagermetallschicht sein, wobei auch mehrere Zwischenschichten 5 in Form von Kombinationen aus den genannten Schichten vorhanden sein können.

Dieser Aufbau eines Mehrschichtgleitlagerelementes 1 ist aus dem Stand der Technik bekannt, sodass hierzu darauf verwiesen sei.

Das Mehrschichtgleitlagerelement 1 bildet zusammen mit zumindest einem weiteren Gleitlagerelement - je nach konstruktivem Aufbau kann auch mehr als ein weiteres Gleitlagerelement vorhanden sein - ein Gleitlager aus, wie dies an sich bekannt ist. Dabei ist bevorzugt das im Betrieb des Gleitlagers höher belastete Gleitlagerelement durch das Mehrschichtgleitlagerelement 1 nach der Erfindung gebildet. Es besteht aber auch die Möglichkeit, dass zumindest eines der zumindest einen weiteren Gleitlagerelemente durch das Mehrschichtgleitlagerelement 1 nach der Erfindung gebildet wird.

Das Mehrschichtgleitlagerelement 1 nach Fig. 1 ist in Form einer Halbschale ausgebildet. Es ist weiter möglich, dass das Mehrschichtgleitlagerelement 1 als Gleitlagerbuchse ausgebildet ist. In diesem Fall ist das Mehrschichtgleitlagerelement 1 gleichzeitig das Gleitlager. Weiter besteht die Möglichkeit einer anderen Teilung, beispielsweise einer Drittelteilung, sodass das Mehrschichtgleitlagerelement 1 mit zwei weiteren Gleitlagerelementen zu einem Gleitlager kombiniert wird, wobei zumindest eines der beiden weiteren Gleitlagerelemente ebenfalls durch das Mehrschichtgleitlagerelement 1 gebildet sein kann. In diesem Fall deckt das Mehrschichtgleitlagerelement nicht einen Winkelbereich von 180 ° sondern einen Winkelbereich von 120° ab.

Insbesondere ist das Mehrschichtgleitlagerelement 1 zur Verwendung in der Motorenindustrie bzw. in Motoren vorgesehen.

Die Stützschicht 3 besteht vorzugsweise aus einem Stahl, kann aber auch aus anderen geeigneten Werkstoffen, wie z.B. einer Bronze, bestehen. Die Stützschicht 3 kann auch durch das Bauteil, das das Mehrschichtgleitlagerelement 1 aufweist, gebildet werden, indem dieses im Lagerbereich direkt beschichtet wird.

Eine allfällige vorhandene Lagermetallschicht kann aus einer Kupferbasislegierung oder einer Aluminiumbasislegierung bestehen, wie sie für diese Zwecke aus dem Stand der Technik bekannt sind. Beispielsweise kann die Lagermetallschicht aus einer Legierung auf Kupferbasis nach DIN ISO 4383, wie z.B. CuSn10, CuAl10Fe5Ni5, CuZn31Si, CuPb24Sn2, CuSn8Bi10, CuSn4Zn, bestehen.

Eine gegebenenfalls vorhandene Bindeschicht oder Diffusionssperrschicht kann ebenfalls aus einem für diese Zwecke aus dem Stand der Technik bekannten Werkstoff bestehen.

Die zumindest eine Gleitschicht 4 weist in einer Umfangsrichtung 6 des Mehrschichtgleitlagerelementes 1, also senkrecht auf eine Radialrichtung 7 und eine Axialrichtung 8 (Fig. 2), sich erstreckende Kanten auf. Die Kanten können durch Seitenkanten 9, 10 gebildet sein, wie dies aus Fig. 2 ersichtlich ist. Die Seitenkanten 9, 10 sind jene Kanten, die die Gleitschicht 4 in der Axialrichtung 8 begrenzen.

Es ist auch möglich, dass die Gleitschicht 4 zumindest eine Nut 11 aufweist, beispielsweise eine Schmiermittelnut, wie dies in Fig. 2 strichliert gezeigt ist. Die Nut 11 erstreckt sich (im Querschnitt betrachtet) von einer Gleitschichtoberfläche 12 der Gleitschicht 4, an der in dieser Ausführungsvariante des Mehrschichtgleitlagerelementes 1 das zu lagernde Bauteil, beispielsweise eine Welle, abgleitet, in Richtung auf die Stützschicht 3 und verläuft in der Gleitschicht 4 in Richtung der Umfangsrichtung 6. In diesem Fall können die Kanten auch (oder zusätzlich) durch die Kanten am Übergang von Nutseitenwänden 13 zur Gleitschichtoberfläche 12 gebildet sein.

Weiter weist die Gleitschicht 4 in der Radialrichtung 7 betrachtet eine Schichtdicke 14 auf. Wie insbesondere aus Fig. 2 ersichtlich ist, ist die Schichtdicke im Bereich zumindest einer der Kanten (im dargestellten Ausführungsbeispiel des Mehrschichtgleitlagerelementes 1 im Bereich der beiden Seitenkanten 9, 10) kleiner als im Bereich neben diesem Bereich. Die Gleitschicht 4 weist also in der Axialrichtung 8 betrachtet einen Schichtdickenverlauf auf.

Es ist auch möglich, dass die Schichtdicke 14 der Gleitschicht 4 nur in einem der beiden Seitenkantenbereiche kleiner ist, als im Rest der Gleitschicht 4.

Der angesprochene Bereich neben dem Bereich mit der reduzierten Schichtdicke 14 der Gleitschicht 4 ist jener Bereich, in dem die Schichtdicke 14 der Gleitschicht 4 ihren Maximalwert hat. Dementsprechend ist der zumindest eine Bereich mit der reduzierten Schichtdicke 14 der an diesen Bereich anschließende Bereich.

Es sei darauf hingewiesen, dass die Gleitschicht 4 nicht über eine Gesamtbreite 15 in der Axialrichtung 8 mit einer Breitenballigkeit ausgeführt ist, wenngleich dies möglich ist. Wie insbesondere aus Fig. 2 ersichtlich ist, ist der Großteil der Gleitschicht 4 mit einer - im Rahmen der üblichen Oberflächenrauigkeit - konstanten Schichtdicke 14 ausgebildet.

Der zumindest eine Bereich mit der reduzierten Schichtdicke 14 der Gleitschicht 4 kann zwischen 0 % und 100 %, insbesondere zwischen 30 % und 70 %, der Gesamtbreite 15 der Gleitschicht 4 in der Axialrichtung 8 betragen.

Im dem zumindest einen Bereich mit der reduzierten Schichtdicke 14 der Gleitschicht 4 kann die Schichtdicke 14 von dem Maximalwert auf einen Wert zwischen 98 % und 60 %, insbesondere zwischen 90 % und 70 %, des Maximalwertes abnehmen. Die Schichtdicke 14 der Gleitschicht 4 ist aber bevorzugt an keiner Stelle Null.

Der Schichtdickenverlauf in dem zumindest einen Bereich mit der reduzierten Schichtdicke 14 ist bevorzugt gerundet ausgeführt, sodass am Übergang zwischen dem zumindest einen Bereich mit der reduzierten Schichtdicke 14 in den Bereich mit dem Maximalwert der Schichtdicke 14 kein scharfkantiger Übergang vorhanden ist. Ein Rundungsradius 16 nimmt dabei mit Entfernung von der Kante bevorzugt kontinuierlich zu. Direkt an der Kante kann der Radius etwa 0,02 mm betragen im Übergang zur ebenen Lauffläche geht er definitionsgemäß gegen unendlich. Besonders bevorzugt nimmt der Rundungsradius 16 exponentiell (r=f(e^{x})) oder potenziell (r=f(xⁿ)) mit der Entfernung (x) zur Kante zu.

Die Gleitschicht 4 besteht zumindest als Hauptbestandteil aus einer metallischen Legierung. Mit "zumindest als Hauptbestandteil" ist gemeint, dass in der Gleitschicht 4 auch nichtmetallische Bestandteile enthalten sein können, wie beispielsweise Festschmierstoff oder anorganische Partikel, wie diese aus dem einschlägigen Stand der Technik für Gleitschichten 4 von Mehrschichtgleitlagerelementen 1 bekannt sind. Vorzugsweise besteht die Gleitschicht 4 jedoch zur Gänze aus einer metallischen Legierung.

Die metallische Legierung umfasst ein erstes metallisches Element, das die Matrix der Legierung bildet, und zumindest ein zweites metallisches Element, das in der Matrix enthalten ist, beispielsweise als intermetallische Phase mit dem ersten Element. Die metallische Legierung kann auch nur aus diesen beiden Elementen bestehen.

Der Anteil des zweiten Elementes weist in der Axialrichtung 8 einen Konzentrationsgradienten auf. Das zweite Element ist dabei mit einem steigenden Gehalt in Richtung auf die zumindest eine Kante in der metallischen Legierung enthalten. Es kann also der Gehalt an dem zweiten Element in Richtung auf die Seitenkante 9 und/oder die Seitenkante 10 der Gleitschicht 4 und/oder in Richtung auf zumindest eine der Kanten der Gleitschicht 4 an der Nut 11 zunehmen. Durch diese Zunahme wird - wie dies voranstehend ausgeführt ist - die Reduktion der Schichtdicke 14 der Gleitschicht 4 in dem Bereich der zumindest einen Kante erreicht.

Das die Matrix bildende Element kann Zinn, Zink oder Silber sein.

Das zweite Element ist zumindest ein Element aus der Gruppe Kupfer, Bismut, Antimon, Zinn, Blei, mit der Maßgabe, dass das zweite Element ungleich dem ersten Element ist.

Bezüglich der Auswahl des ersten und des zweiten Elementes sowie deren Anteile in der Gleitschicht 4 sei auf die voranstehenden Ausführungen verwiesen. Den Rest auf 100 Gew.-% bilden das erste, die Matrix bildenden Element und gegebenenfalls aus der Herstellung der in der Gleitschicht 4 enthaltenen Elemente stammende Verunreinigungen, sofern kein weiteres Legierungselement und/oder keine Partikel enthalten ist/sind. Der Anteil des zumindest einen weiteren Legierungselementes und/oder der Partikel an der Gleitschicht kann dem Stand der Technik für Gleitlagerelemente entsprechend gewählt werden.

Gemäß einer bevorzugten Ausführungsvariante ist der Anteil des zweiten Elementes in der Gleitschicht im Bereich der Kante (bzw. im Bereich der Kanten) um mindestens 2 Gew.-% höher ist, als der durchschnittliche Anteil dieses Elementes in der Gleitschicht 4. Bei einem durchschnittlichen Anteil von 8 Gew.-% an diesem Element beträgt also dessen Gehalt mindestens 10 Gew.-% im Bereich der Kante(n).

Die Herstellung der Gleitschicht 4 erfolgt durch galvanische Abscheidung, d.h. dass die Gleitschicht 4 eine Galvanikschicht ist.

Es sei an dieser Stelle erwähnt, dass die Gleitschicht 4 eine einzige, durchgehende Schicht ist. Das Mehrschichtgleitlagerelement 1 weist in den Bereichen der Kante(n) also keine Teilschichten auf, die in einem eigenen, gesonderten Verfahrensschritt aufgebracht werden, also beispielsweise keine Streifen, die vor oder nach der Abscheidung der Gleitschicht 4 angeordnet werden. Die Gleitschicht 4 wird also in einem einzigen Verfahrensschritt zur Herstellung des Mehrschichtgleitlagerelementes 1 abgeschieden.

Für die Abscheidung wird die Stützschicht 3 oder ein Verbundmetallstreifen, beispielsweise ein Bimetall aus Stützschicht 3 und einer Lagermetallschicht bereitgestellt, die/das bereits die richtigen Abmessungen aufweist und entsprechend der gewünschten Form umgeformt wurde, beispielsweise die Form einer Halbschale hat. Dieses Rohmaterial wird dann, gegebenenfalls nach vorheriger Reinigung, in das Galvanikbad gegeben.

Für die galvanische Abscheidung der Gleitschicht 4 können folgende Parameter verwendet werden: Stromdichte zwischen 0,5 A/dm² und 7 A/dm²; Abscheidedauer zwischen 5 Minuten und 60 Minuten; Temperatur zwischen 20 °C und 80 °C. Es sei jedoch darauf hingewiesen, dass in Einzelfällen auch andere Parameter außerhalb der angegebenen Bereiche angewandt werden können.

Während der Abscheidung der Gleitschicht 4 wird der Rohling für das Mehrschichtgleitlagerelement 1 im Galvanikbad bewegt, insbesondere mit einer oszillierenden Bewegung senkrecht auf die zu beschichtende Oberfläche des Rohlings. Es werden damit Wirbel im Galvanikbad ausgelöst, die zur Reduktion der Schichtdicke 14 der Gleitschicht im Bereich der Kanten beitragen. Zusätzlich kann der zu beschichtende Rohling vor der Abscheidung der Gleitschicht 4 im Bereich der Kante(n) mit einer Fase versehen werden.

Besonders bevorzugt entspricht die Höhe (Amplitude) der oszillierenden Bewegung der 0,1-bis 3-fachen axialen Länge des Bereiches mit reduzierter Schichtdicke.

Die zu beschichtenden Rohlinge können in dem Galvanikbad auch in einer entsprechenden Haltevorrichtung gestapelt werden. Dies ermöglicht die gleichzeitige Beschichtung mehrerer Bauteile.

Vorzugsweise wird die oszillierende Bewegung mit einer Frequenz von mehr als 0,5 Hz, insbesondere mehr als 2 Hz, und maximal 5 Hz durchgeführt, um die für die Schichtdickenabnahme bevorzugte Verwirbelungen an den Kanten hervorzurufen.

Zur Verstärkung der Verwirbelung bei gleichzeitiger Beschichtung von mehr als einem Rohling in dem Galvanikbad können zwischen den Rohlingen Distanzelemente, insbesondere Distanzplättchen, beigelegt werden und/oder die Rohlinge mit Fasen an den Kanten der zu beschichtenden Oberfläche hergestellt werden, so dass der Abstand zwischen den Seitenkanten der zu beschichtenden Oberfläche der übereinander gestapelten Rohlinge mindestens 2 mm, insbesondere mind. 5 mm, und die Tiefe der Fase bzw. die radiale Tiefe bis zum Beginn des Distanzplättchens ebenfalls mindestens 1 mm, insbesondere mind. 5 mm, beträgt. Die maximale Tiefe ist durch die Lagerwanddicke begrenzt, wobei bevorzugt zumindest an einem Teil der Umfangslänge Durchbrüche bestehen, die Distanzplättchen also nicht entlang der gesamten Umfangslänge vorhanden sind. Durch diese Verwirbelungshilfen und/oder Fasen ist auch eine Oszillation mit einer Frequenz von unter 0,5 Hz ausreichend.

Eine andere Möglichkeit zur Herstellung der Gleitschicht 4 besteht in der gezielten tangentialen Anströmung der Kantenbereiche durch Düsen oder Strömungsbleche. Solche Bleche wandeln beispielsweise die vertikale, oszillierende Strömung durch die Hubbewegung in die gewünschte tangentiale Strömung um.

Alle oben genannten Effekte können durch den zusätzlichen Einbau von Blenden in das Galvanikbad weiter verstärkt werden. Die Blenden reduzieren die Stromdichte im Kantenbereich und verstärken dadurch zusätzlich die Abscheidung der edleren Legierungselemente, was zu einer Verstärkung der Schichtdickenreduktion führt. Auf diesem Weg sind relativ hohe Schichtdickenreduktionen bei vergleichsweise geringem Legierungsgradienten möglich.

Es sei in diesem Zusammenhang erwähnt, dass der Ausdruck "Galvanikbad" nicht zwingenderweise das Becken, in dem die Galvaniklösung der Elemente enthalten ist, umfasst. Es kann also auch nur die Galvaniklösung der Elemente ohne das Galvanikbecken auf die beschriebene Art und Weise bewegt werden. Beispielsweise ist es möglich, die Verwirbelung durch eine Hubbewegung der Haltevorrichtung, in der der zu beschichtende oder die zu beschichtenden Gleitlagerelementrohling(e) für die galvanische Abscheidung der Gleitschicht(en) 4 angeordnet ist/sind, zu erreichen.

Generell kann die Hubbewegung zur Erzeugung der Verwirbelung zwischen 0,5 cm, insbesondere 1 cm, und 5 cm, insbesondere 3 cm, betragen.

Mit diesem Verfahren können Gleitschichten 4 hergestellt werden, die im Bereich der Kante(n) beispielsweise eine Reduktion der Schichtdicke 14 zwischen 2 µm und 8 µm, insbesondere zwischen 2 µm und 4 µm aufweisen. Die maximale Schichtdicke 14 der Gleitschicht 4 kann dabei zwischen 10 µm und 40 µm, insbesondere zwischen 15 µm und 30 µm, betragen.

Wie in Fig. 2 strichliert dargestellt, kann gemäß einer weiteren Ausführungsvariante des Mehrschichtgleitlagerelementes 1 vorgesehen sein, dass auf der Gleitschicht 4, also auf einer radial inneren Seite des Mehrschichtgleitlagerelementes 1, eine weitere Schicht 17 angeordnet ist, die insbesondere mit der Gleitschicht 4 direkt verbunden ist. Diese weitere Schicht weist einen Anteil an dem zweiten Element auf, der geringer ist, als der durchschnittliche Anteil dieses Elementes in der Gleitschicht 4. Insbesondere wird die Matrix der weiteren Schicht 17 ebenfalls durch das erste Element gebildet. Es kann auch vorgesehen sein, dass zumindest ein weiteres Element in der weiteren Schicht 17 enthalten ist, insbesondere zumindest eines der voranstehend genannten weiteren Elemente.

Beispielsweise kann auf einer Laufschicht aus dem System Zinn-Kupfer eine Einlaufschicht aus diesen Elementen angeordnet sein.

Bevorzugt ist die weitere Schicht 17 wie die Gleitschicht 4 eine Zinnbasislegierung, wobei der Kupfergehalt weniger als 2 Gew.-%, insbesondere zwischen 0,1 Gew.-% und 1,9 Gew.-%, beträgt. Selbstverständlich kann auch diese Schicht weitere Legierungselemente ohne wesentlichen Einfluss auf die Ausprägung der Schichtdicke enthalten, wie z.B. 0 Gew.-% bis 1 Gew.-% Antimon und/oder 0 Gew.-% bis 0,5 Gew.-% Bismut und/oder 0 Gew.-% bis 0,2 Gew.-% Blei.

In gleicher Weise kann auf Ag-Pb-Schichten eine Reinbleischicht oder eine Bleilegierungsschicht angeordnet sein, etc.. Bevorzugt ist das vorwiegend oder gänzlich zum Einsatz kommende Element dieser Einlaufschicht das weichere (d.h. anpassungsfähigere) Element der Gleitschicht 4.

In den Fällen wo das weichere Element zugleich das elektrochemisch edlere Element ist kann die Einlaufschicht mitunter aus dem selben Elektrolyten abgeschieden werden, indem die Stromdichte auf 3 % bis 30 % der Regelstromdichte reduziert wird (soweit, dass sich das unedlere Element nicht mehr oder nur zu einem sehr geringen Anteil abscheidet). Beispiele dafür sind die cyanidischen Elektrolyte der Systeme Sn-Zn, Ag-Pb und Ag-Bi.

Eine Schichtdicke 18 dieser weiteren Schicht 17 beträgt bevorzugt zwischen 1 µm und 15 µm, insbesondere zwischen 2 µm und 8 µm.

Es entsteht damit eine weitere Schicht 17, die bedingt durch den geringen Anteil an dem zweiten Element über den Querschnitt in der Umfangsrichtung 6 (Fig. 1) betrachtet keine signifikante Änderung der Schichtdicke 18 aufweist. Die weitere Schicht 17 weist somit zumindest annähernd überall die gleiche Schichtdicke 18 auf.

Vorzugsweise weist die Gesamtheit aus der Gleitschicht 4 und der weiteren Schicht 17 im System Zinn-Kupfer einen durchschnittlichen Gehalt an dem zweiten Element, insbesondere an Kupfer, auf, der zwischen 6 Gew.-% und 22 Gew.-%, insbesondere zwischen 6 Gew.-% und 12 Gew.-%, beträgt.

### Ausführungsbeispiele

Die folgenden Ausführungsbeispiele sind stellvertretend für den in den Ansprüchen definierten Umfang der Erfindung zu sehen.

### Ausführungsbeispiel 1: Sn-Cu-Sb Legierungen

Für Sn-Cu-Sb Legierungen wurden folgende, in Tabelle 1 angegebene Volumenausbeuten in % relativ zu Reinzinn erhalten. Die Mengenanteile an Cu und Sb sind in Gew.-% angegeben. Den Rest auf 100 Gew.-% bildet Sn.

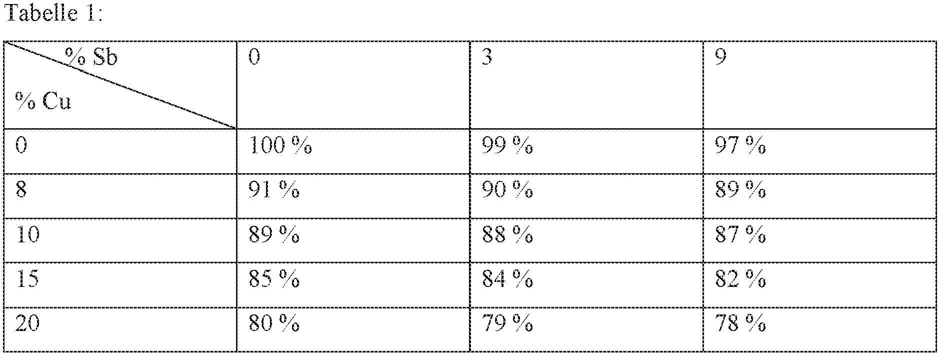

Bei einer durchschnittlichen Schichtdicke 14 der Gleitschicht 4 von 30 µm und einer durchschnittlichen Zusammensetzung von SnCu8 (91 %) konnte im Bereich der Kante(n) die Zusammensetzung SnCu10 mit einer Schichtdicke 14 von 29,3 µm (89 %) erhalten werden. Bei einer Zusammensetzung von SnCu15 im Bereich der Kante(n) wurde ein Schichtdicke 14 von 28 µm (85 %) und bei einer Zusammensetzung von SnCu20 eine Schichtdicke 14 von 26,4 µm (80 %) erhalten. Sehr lokal wurden auch Kupfergehalte von 35 Gew.-% beobachtet.

Ausführungsbeispiel 2: Gleitschicht 4 aus SnCu12 mit weiterer Schicht 17 aus Reinzinn Herstellung der Gleitschicht 4 mit Kantenverlauf

| | |
|---|---|
| Zinn | 80 g/l (als Zinn(II)tetrafluoroborat) |
| Kupfer | 10 g/l (als Kupfertetrafluoroborat) |
| Tetrafluoroborsäure | 100 g/l |
| 1,4-Dihydroxybenzol | 1,5 g/l |
| 2-Naphthol-Ethoxylat (12 EO) | 5 g/l |
| Stromdichte | 4 A/dm² |
| Dauer | 13 min |
| Temperatur | 35°C |
| Hubbewegung | 1 Hz, 20 mm Hubhöhe |

Die Abkürzung EO steht für Ethylenoxid.

### Herstellung der weiteren Schicht 17

| | |
|---|---|
| Zinn | 20 g/l (als Zinn(II)tetrafluoroborat) |
| Tetratluoroborsäure | 100 g/l |
| Hydrochinon | 1,5 g/l |
| 2-Naphthol-Ethoxylat (12 EO) | 5 g/l |
| Stromdichte | 1 A/dm² |
| Dauer | 4 min |
| Temperatur | 20°C |
| Hubbewegung | 1 Hz, 20 mm Hubhöhe |

Die Untersuchung des so abgeschiedenen Schichtverbundes ergab folgende Ergebnisse.

| | | | | | | |
|---|---|---|---|---|---|---|
| Abstand von der Kante [mm] | 0 | 0,3 | 1 | 3 | 10 | 30 |
| Dicke Gleitschicht 4 [µm] | 19 | 19,5 | 20 | 21 | 22 | 23 |
| Anteil an Cu in der Gleitschicht 4 in Gew.-% | 31 | 25 | 22 | 18 | 15 | 12 |
| Härte der Gleitschicht 4 HV0,001 | 90 | 80 | 75 | 65 | 50 | 40 |
| Dicke der weiteren Schicht 17 [µm] | 3 | 2,5 | 2,2 | 2,0 | 2,0 | 2,0 |

Die Gesamtbreite der Lagerschale betrug 110 mm, die Abschwächung war an beiden Seitenkanten ähnlich ausgeprägt. Die Zusammensetzung in der Mitte der Lagerschale war jener bei 30 mm Entfernung sehr ähnlich.

Bei einer Wiederholung dieses Ausführungsbeispiels mit etwa doppelt so dicker Ausführung der Gleitschicht 4 trat der absolute Effekt etwa doppelt so hoch auf (46 µm Gleitschicht 4 in 30 mm Abstand von der Kante und 38 µm Gleitschicht 4 an der Kante, also 8 µm geringer).

Ausführungsbeispiel 3: Kombination aus harter SnCu10Sb3 Gleitschicht 4 mit weicherer SnSb3Bi3 Schicht 17

### Herstellung der Gleitschicht 4 mit Kantenverlauf

| | |
|---|---|
| Zinn | 65 g/l (als Zinn(II)tetrafluoroborat) |
| Kupfer | 8 g/l (als Kupfertetrafluoroborat) |
| Antimon | 3 g/l (als Antimontrifluorid) |
| Tetrafluoroborsäure | 70 g/l |
| 1,2-Dihydroxybenzol | 5 g/l |
| C10-iso-Alkohol-Ethoxylat (10 EO) | 5 g/l |
| Stromdichte | 5 A/dm² |
| Dauer | 8 min |
| Temperatur | 28°C |
| Hubbewegung | 0,5 Hz, 5 mm Hubhöhe |

### Herstellung der weiteren Schicht 17 mit Kantenverlauf

| | |
|---|---|
| Zinn | 30 g/l (Zinn(II)methansulfonat) |
| Antimon | 1 g/l (als Antimontrifluorid) |
| Bismut | 1 g/l (als Bismutmethansulfonat) |
| Methansulfonsäure | 100 g/l |
| 1,3-Dihydroxybenzol | 1 g/l |
| 2-Naphthol | 0,2 g/l |
| Pepton | 1 g/l |
| Stromdichte | 2 A/dm² |
| Dauer | 7 min |
| Temperatur | 15°C |
| Hubbewegung | 2 Hz, 15 mm Hubhöhe |
| Blenden axial | 10 mm, Abstand 50 mm zur Lageroberfläche |

Die Untersuchung des so abgeschiedenen Schichtverbundes ergab folgende Ergebnisse.

| | | | | | | |
|---|---|---|---|---|---|---|
| Abstand von der Kante [mm] | 0 | 0,5 | 2 | 6 | 12 | 20 |
| Dicke Gleitschicht 4 [µm] | 15 | 16 | 17 | 17,5 | 18 | 18 |
| Anteil an Cu in der Gleitschicht 4 in Gew.-% | 25 | 20 | 15 | 12 | 10 | 9 |
| Anteil an Sb in der Gleitschicht 4 in Gew.-% | 5 | 4,5 | 4 | 3,3 | 3,2 | 3 |
| Härte der Gleitschicht 4 HV0,001 | 79 | 63 | 45 | 39 | 37 | 35 |
| Dicke der weiteren Schicht 17 [µm] | 5 | 5,5 | 6 | 6,5 | 7 | 7,5 |
| Anteil an Sb in der Schicht 17 in Gew.-% | 6 | 5 | 4,0 | 3,5 | 3,2 | 3 |
| Anteil an Bi in der Schicht 17 in Gew.-% | 12 | 9 | 6 | 5 | 5 | 3 |
| Härte der Schicht 17 HV0,0005 | 25 | 23 | 2 1 | 20 | 18 | 17 |

Die Gesamtbreite der Lagerschale betrug 56 mm, die Abschwächung war an beiden Seitenkanten ähnlich ausgeprägt. Die Zusammensetzung in der Mitte der Lagerschale war jener bei 20 mm Entfernung sehr ähnlich.

Die weitere Schicht 17 (die in diesem Fall auch als zweite Gleitschicht 4 bezeichnet werden kann), wurde zusätzlich mit Blenden an den Kanten abgeschwächt. Ohne diese Blenden war der Schichtdickenabfall zur Kante nur etwa 1 µm bis 1,5 µm.

Es sei angemerkt, dass es generell möglich ist, dass die weitere Schicht 17 eine zweite Gleitschicht 4 ist. Generell kann die Gleitschicht 4 auch aus mehreren Teilschichten bestehen. Weiter kann vorgesehen sein, dass auf einer aus mehreren Teilschichten bestehenden Gleitschicht 4 oder auf einem Schichtaufbau mit einer ersten Gleitschicht 4 und einer zweiten Gleitschicht 4 eine weitere Schicht 17 angeordnet ist.

### Ausführungsbeispiel 4: Gleitschicht 4 aus SnZn20Cu4

### Herstellung der Gleitschicht 4 mit Kantenverlauf

| | |
|---|---|
| Zinn | 20 g/l (als Kalium-Stannat) |
| Zink | 2 g/l (als Zinkoxid) |
| Kupfer | 0,5 g/l (als Kupfer(I)cyanid) |
| Kaliumcyanid (frei) | 2,0 g/l |
| Kaliumhydroxid (frei) | 20 g/l |
| Kaliumcarbonat | 10 g/l |
| Fettsäureamidoalkylbetain | 1 g/l |
| Stromdichte | 2 A/dm² |
| Dauer | 50 min |
| Temperatur | 45°C |
| Hubbewegung | 1 Hz, 8 mm Hubhöhe |

Durch die niedrige Cyanidkonzentration (schwache Kupfer- und Zink-Komplexierung) bei hoher Hydroxidkonzentration (starke Zinn-Komplexierung) ist Zink in dieser Abscheidung edler als Zinn, wird also bevorzugt abgeschieden.

Die Untersuchung der so abgeschiedenen Gleitschicht 4 ergab folgende Ergebnisse.

| | | | | | | |
|---|---|---|---|---|---|---|
| Abstand von der Kante [mm] | 0 | 0,3 | 1 | 3 | 10 | 30 |
| Dicke Gleitschicht 4 [µm] | 16,5 | 17,2 | 17,8 | 18,5 | 19,3 | 20,0 |
| Anteil an Zn in der Gleitschicht 4 in Gew.-% | 40 | 35 | 30 | 25 | 22 | 20 |
| Anteil an Cu in der Gleitschicht 4 in Gew.-% | 8 | 6 | 5 | 4 | 3,5 | 3,5 |
| Härte der Gleitschicht 4 HV0,001 | 60 | 51 | 45 | 39 | 3 5 | 30 |
| Dicke der weiteren Schicht 17 [µm] | 3,5 | 3,5 | 3,5 | 3,5 | 3,5 | 3,5 |

Als weitere Schicht 17 wurde Reinzinn entsprechend Ausführungsbeispiel 2, allerdings ohne die dort angegebene Hubbewegung, abgeschieden.

Die Gesamtbreite der Lagerschale betrug 100 mm, die Abschwächung war an beiden Seitenkanten ähnlich ausgeprägt. Die Zusammensetzung in der Mitte der Lagerschale war jener bei 30 mm Entfernung sehr ähnlich.

Selbstverständlich wurde zwischen den beiden Beschichtungen gespült.

Ausführungsbeispiel 5: Gleitschicht 4 aus AgPb10 mit weiterer Schicht 17 aus Blei-Zinn

### Herstellung der Gleitschicht 4 mit Kantenverlauf

| | |
|---|---|
| Silber | 15 g/l (als Kalium-Silber-Cyanid, 54% Ag) |
| Kaliumcyanid (frei) | 30 g/l |
| Kaliumhydroxid (frei) | 0,5 g/l |
| Kaliumcarbonat | 10 g/l |
| Blei | 5 g/l (als Bleiacetat) |
| Kaliumtartrat | 50 g/l |
| Stromdichte | 0,5 A/dm² |
| Dauer | 50 min |
| Temperatur | 45°C |
| Hubbewegung | 1 Hz, 8 mm Hubhöhe |

Durch die hohe Cyanidkonzentration (sehr starke Silber-Komplexierung) bei niedriger Hydroxidkonzentration (schwache Bleikomplexierung) ist Blei in dieser Abscheidung edler als Silber, wird also bevorzugt abgeschieden.

### Herstellung der weiteren Schicht 17

| | |
|---|---|
| Blei | 20 g/l (als Bleitetrafluoroborat) |
| Zinn | 2 g/l (als Zinn(II)tetrafluoroborat) |
| Tetrafluoroborsäure | 100 g/l |
| Hydrochinon | 1,5 g/l |
| 2-Naphthol-Ethoxylat (12 EO) | 5 g/l |
| Strom dichte | 1,5 A/dm² |
| Dauer | 4 min |
| Temperatur | 20°C |
| Hubbewegung | 1 Hz, 20 mm Hubhöhe |
| Zusammensatzung | Blei mit 10 Gew.-% Zinn |

Die Untersuchung des so abgeschiedenen Schichtverbundes ergab folgende Ergebnisse.

| | | | | | | |
|---|---|---|---|---|---|---|
| Abstand von der Kante [mm] | 0 | 0,3 | 1 | 3 | 6 | 10 |
| Dicke Gleitschicht 4 [µm] | 14,0 | 14,2 | 14,4 | 14,6 | 14,8 | 15,0 |
| Anteil an Pb in der Gleitschicht 4 in Gew.-% | 70 | 60 | 45 | 30 | 20 | 10 |
| Härte der Gleitschicht 4 HV0,001 | 30 | 54 | 72 | 83 | 109 | 120 |
| Dicke der weiteren Schicht 17 [µm] | 3,5 | 3,5 | 3,5 | 3,5 | 3,5 | 3,5 |

Die Gesamtbreite der Lagerschale betrug 30 mm, die Abschwächung war an beiden Seitenkanten ähnlich ausgeprägt. Die Zusammensetzung in der Mitte der Lagerschale war jener bei 30 mm Entfernung sehr ähnlich.

Selbstverständlich wurde zwischen den beiden Beschichtungen gespült.

Die Schichtdickenabnahme der zumindest einen Gleitschicht 4 und gegebenenfalls der weiteren Schicht 17 wird bevorzugt durch eine Kombination aus der erwähnten Hubbewegung und der Konzentrationen der Elemente im Galvanikbad, wie sie voranstehend angegeben sind, erreicht.

Die Ausführungsbeispiele zeigen bzw. beschreiben mögliche Ausführungsvarianten, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Mehrschichtgleitlagerelementes 1 dieses bzw. dessen Bestandteile teilweise unmaßstäblich und/oder vergrößert und/oder verkleinert dargestellt wurden.

### Bezugszeichenaufstellung

- 1: Mehrschichtgleitlagerelement
- 2: Gleitlagerelementkörper
- 3: Stützschicht
- 4: Gleitschicht
- 5: Zwischenschicht
- 6: Umfangsrichtung
- 7: Radialrichtung
- 8: Axialrichtung
- 9: Seitenkante
- 10: Seitenkante
- 11: Nut
- 12: Gleitschichtoberfläche
- 13: Nutseitenwand
- 14: Schichtdicke
- 15: Gesamtbereite
- 16: Rundungsradius
- 17: Schicht
- 18: Schichtdicke

## Patentansprüche

1. Mehrschichtgleitlagerelement (1) umfassend eine Stützschicht (3) und zumindest eine Gleitschicht (4), wobei die Gleitschicht (4) in einer Umfangsrichtung (6) verlaufende Kanten (9, 10) und eine Schichtdicke (14) in radialer Richtung aufweist, wobei weiter die Schichtdicke (14) der Gleitschicht (4) im Bereich zumindest einer der Kanten (9, 10) kleiner ist als in einem Bereich neben den Kanten (9, 10), und die Gleitschicht (4) zumindest als Hauptbestandteil aus einer metallischen Legierung besteht, die ein erstes, eine Matrix bildendes Element und zumindest ein zweites Element aufweist, **dadurch gekennzeichnet, dass** das zweite Element mit einem in einer Axialrichtung (8) verlaufenden Konzentrationsgradienten enthalten ist, wobei der Anteil des zweiten Elementes in der Legierung in Richtung auf die Kante (9, 10) zunimmt und wobei das zweite Element ein kleineres Stromäquivalent als das erste, die Matrix bildende Element und/oder wobei das zweite Element oder daraus gebildete intermetallische Phasen eine höhere Dichte hat/haben, als das erste, die Matrix bildende Element.

2. Mehrschichtgleitlagerelement (1) nach Anspruch 1, **dadurch gekennzeichnet, dass** das erste Element Zinn und das zweite Element zumindest ein Element aus einer Gruppe bestehend aus Kupfer, Bismut, Antimon sind.

3. Mehrschichtgleitlagerelement (1) nach Anspruch 2, **dadurch gekennzeichnet, dass** der Anteil an Kupfer im Bereich der Kante (9, 10) um mindestens 2 Gew.-% höher ist, als der durchschnittliche Anteil dieses Elementes in der Gleitschicht (4), und maximal 30 Gew.-% beträgt.

4. Mehrschichtgleitlagerelement (1) nach Anspruch 2, **dadurch gekennzeichnet, dass** der Anteil an Bismut im Bereich der Kante (9, 10) um mindestens 2 Gew.-% höher ist, als der durchschnittliche Anteil dieses Elementes in der Gleitschicht (4), und maximal 15 Gew.-% beträgt.

5. Mehrschichtgleitlagerelement (1) nach Anspruch 2, **dadurch gekennzeichnet, dass** der Anteil an Antimon im Bereich der Kante (9, 10) um mindestens 5 Gew.-% höher ist, als der durchschnittliche Anteil dieses Elementes in der Gleitschicht (4), und maximal 40 Gew.-% beträgt.

6. Mehrschichtgleitlagerelement (1) nach Anspruch 1, **dadurch gekennzeichnet, dass** das erste Element Zink und das zweite Element Zinn sind.

7. Mehrschichtgleitlagerelement (1) nach Anspruch 6, **dadurch gekennzeichnet, dass** der Anteil an Zinn im Bereich der Kante (9, 10) um mindestens 2 Gew.-% höher ist, als der durchschnittliche Anteil dieses Elementes in der Gleitschicht (4).

8. Mehrschichtgleitlagerelement (1) nach Anspruch 1, **dadurch gekennzeichnet, dass** das erste Element Silber und das zweite Element Blei sind.

9. Mehrschichtgleitlagerelement (1) nach Anspruch 8, **dadurch gekennzeichnet, dass** der Anteil an Blei im Bereich der Kante (9, 10) um mindestens 2 Gew.-% höher ist, als der durchschnittliche Anteil dieses Elementes in der Gleitschicht (4), und maximal 60 Gew.-% beträgt.

10. Mehrschichtgleitlagerelement (1) nach Anspruch 1, **dadurch gekennzeichnet, dass** das erste Element Silber und das zweite Element Bismut sind.

11. Mehrschichtgleitlagerelement (1) nach Anspruch 10, **dadurch gekennzeichnet, dass** der Anteil an Bimsut im Bereich der Kante (9, 10) um mindestens 2 Gew.-% höher ist, als der durchschnittliche Anteil dieses Elementes in der Gleitschicht (4).

12. Mehrschichtgleitlagerelement (1) nach einem der Ansprüche 1 bis 11, **dadurch gekennzeichnet, dass** auf der Gleitschicht (4) eine weitere Schicht (17) angeordnet ist, die einen Anteil an dem zweiten Element aufweist, der geringer ist, als der durchschnittliche Anteil dieses Elementes in der Gleitschicht (4).

13. Verfahren zur Herstellung eines Mehrschichtgleitlagers (1) umfassend zumindest eine Stützschicht (3) und eine Gleitschicht (4), wobei die Gleitschicht (4) in einer Umfangsrichtung (6) verlaufende Kanten (9, 10) und eine Schichtdicke (14) in radialer Richtung aufweist, wobei weiter die Schichtdicke (14) der Gleitschicht (4) im Bereich zumindest einer der Kanten (9, 10) kleiner hergestellt wird als in einem Bereich neben den Kanten (9, 10), **dadurch gekennzeichnet, dass** die Gleitschicht (4) als metallische Legierung mit einem ersten, eine Matrix bildenden Element und zumindest einem zweiten Element aus einem Galvanikbad galvanisch abgeschieden wird, und dass das zweite Element mit einem in einer Axialrichtung (8) verlaufenden Konzentrationsgradienten mit zunehmendem Anteil des zweiten Elementes in der Legierung in Richtung auf die Kante (9, 10) abgeschieden wird, und wobei als zweites Element ein Element mit im Vergleich zum ersten Element kleinerem Stromäquivalent eingesetzt wird und/oder wobei als zweites Element ein Element eingesetzt wird, das oder dessen daraus gebildete intermetallische Phasen eine höhere Dichte hat/haben, als das erste Element.

14. Verfahren nach Anspruch 13, **dadurch gekennzeichnet, dass** das Galvanikbad während der Abscheidung der Elemente mit einer oszillierenden Bewegung senkrecht auf die zu beschichtende Oberfläche bewegt wird.

15. Verfahren nach Anspruch 14, **dadurch gekennzeichnet, dass** die oszillierende Bewegung mit einer Höhe durchgeführt wird, die dem 0,1- bis 3-fachen der beabsichtigten Länge des Bereichs mit reduzierter Schichtdicke entspricht.

16. Verfahren nach Anspruch 14 oder 15, **dadurch gekennzeichnet, dass** die oszillierende Bewegung mit einer Frequenz von mehr als 0,5 Hz durchgeführt wird.

17. Verfahren nach einem der Ansprüche 14 bis 16, **dadurch gekennzeichnet, dass** mehrere Mehrschichtgleitlager in einem Galvanikbad gleichzeitig hergestellt werden, wobei zwischen den Rohlingen für die Mehrschichtgleitlager Distanzelemente angeordnet werden.

## Claims

1. A multi-layer sliding bearing element (1), comprising a support layer (3) and at least one sliding layer (4), wherein the sliding layer (4) has edges (9, 10) extending in a circumferential direction (6) and a layer thickness (14) in the radial direction, wherein further the layer thickness (14) of the sliding layer (4) in the region of at least one of the edges (9, 10) is lower than in a region next to the edges (9, 10), and the sliding layer (4) consists, at least as the main component, of a metallic alloy, which has a first element forming a matrix and at least one second element, **characterized in that** the second element is contained with a concentration gradient extending in an axial direction (8), wherein the proportion of the second element in the alloy increases in the direction towards the edge (9, 10) and wherein the second element has a smaller current equivalent than the first element forming the matrix and/or wherein the second element or intermetallic phases formed thereof has/have a higher density than the first element forming the matrix.

2. The multi-layer sliding bearing element (1) according to claim 1, **characterized in that** the first element is tin and the second element is at least one element out of a group consisting of copper, bismuth, antimony.

3. The multi-layer sliding bearing element (1) according to claim 2, **characterized in that** the proportion of copper in the region of the edge (9, 10) is at least 2 wt.% higher than the average proportion of this element in the sliding layer (4), and amounts to a maximum of 30 wt.%.

4. The multi-layer sliding bearing element (1) according to claim 2, **characterized in that** the proportion of bismuth in the region of the edge (9, 10) is at least 2 wt.% higher than the average proportion of this element in the sliding layer (4), and amounts to a maximum of 15 wt.%.

5. The multi-layer sliding bearing element (1) according to claim 2, **characterized in that** the proportion of antimony in the region of the edge (9, 10) is at least 5 wt.% higher than the average proportion of this element in the sliding layer (4), and amounts to a maximum of 40 wt.%.

6. The multi-layer sliding bearing element (1) according to claim 1, **characterized in that** the first element is zinc and the second element is tin.

7. The multi-layer sliding bearing element (1) according to claim 6, **characterized in that** the proportion of tin in the region of the edge (9, 10) is at least 2 wt.% higher than the average proportion of this element in the sliding layer (4).

8. The multi-layer sliding bearing element (1) according to claim 1, **characterized in that** the first element is silver and the second element is lead.

9. The multi-layer sliding bearing element (1) according to claim 8, **characterized in that** the proportion of lead in the region of the edge (9, 10) is at least 2 wt.% higher than the average proportion of this element in the sliding layer (4), and amounts to a maximum of 60 wt.%.

10. The multi-layer sliding bearing element (1) according to claim 1, **characterized in that** the first element is silver and the second element is bismuth.

11. The multi-layer sliding bearing element (1) according to claim 10, **characterized in that** the proportion of bismuth in the region of the edge (9, 10) is at least 2 wt.% higher than the average proportion of this element in the sliding layer (4).

12. The multi-layer sliding bearing element (1) according to one of claims 1 to 11, **characterized in that** a further layer (17) is arranged on the sliding layer (4), said further layer (17) having a proportion of the second element that is lower than the average proportion of this element in the sliding layer (4).

13. A method for producing a multi-layer sliding bearing element (1), comprising at least one support layer (3) and one sliding layer (4), wherein the sliding layer (4) has edges (9, 10) extending in a circumferential direction (6) and a layer thickness (14) in the radial direction, wherein further the layer thickness (14) of the sliding layer (4) in the region of at least one of the edges (9, 10) is made to be less than in a region next to the edges (9, 10), **characterized in that** the sliding layer (4) as a metallic alloy is electroplated from an electroplating bath with a first element forming a matrix and at least one second element, and that the second element is deposited with a concentration gradient extending in an axial direction (8) having an increasing proportion of the second element in the alloy in the direction towards the edge (9, 10), and wherein an element having a smaller current equivalent compared with the first element is used as the second element, and/or wherein an element which has or whose intermetallic phases formed thereof have a higher density than the first element is used as the second element.

14. The method according to claim 13, **characterized in that** the electroplating bath is moved in an oscillating movement vertically towards the surface to be coated during the electroplating of the elements.

15. The method according to claim 14, **characterized in that** the oscillating movement is carried out at a height corresponding to 0.1 to 3 times the intended length of the region with reduced layer thickness.

16. The method according to claim 14 or 15, **characterized in that** the oscillating movement is carried out at a frequency of more than 0.5 Hz.

17. The method according to one of claims 14 to 16, **characterized in that** multiple multi-layer sliding bearings are produced simultaneously in an electroplating bath, wherein distancing elements are arranged between the blanks for the multi-layer sliding bearings.

## Revendications

1. Élément de palier lisse multicouche (1) comprenant une couche de support (3) et au moins une couche de glissement (4), dans lequel la couche de glissement (4) comprend des arêtes (9, 10) s'étendant dans une direction circonférentielle (6) et présente une épaisseur de couche (14) dans une direction radiale, dans lequel en outre l'épaisseur de couche (14) de la couche de glissement (4) est, au niveau d'au moins une des arêtes (9, 10), inférieure à une épaisseur dans une zone proche des arêtes (9, 10), et la couche de glissement (4) est constituée, au moins en tant que composant principal, d'un alliage métallique qui comprend un premier élément formant une matrice et au moins un deuxième élément, **caractérisé en ce que** le deuxième élément est contenu avec un gradient de concentration s'étendant dans une direction axiale (8), dans lequel la proportion du deuxième élément dans l'alliage augmente en direction de l'arête (9, 10) et dans lequel le deuxième élément présente un équivalent courant inférieure au premier élément constituant la matrice et/ou dans lequel le deuxième élément ou des phases intermétalliques qui en sont constituées présentent une densité supérieure à celle de l'élément constituant la matrice.

2. Élément de palier lisse multicouche (1) selon la revendication 1, **caractérisé en ce que** le premier élément est l'étain et le deuxième élément est au moins un élément sélectionné dans un groupe constitué du cuivre, du bismuth et de l'antimoine.

3. Élément de palier lisse multicouche (1) selon la revendication 2, **caractérisé en ce que** la proportion de cuivre au niveau de l'arête (9, 10) est supérieur d'au moins 2 % en poids à la proportion moyenne de cet élément dans la couche de glissement (4) et représente au maximum 30 % en poids.

4. Élément de palier lisse multicouche (1) selon la revendication 2, **caractérisé en ce que** la proportion de bismuth au niveau de l'arête (9, 10) est supérieur d'au moins 2 % en poids à la proportion moyenne de cet élément dans la couche de glissement (4) et représente au maximum 15 % en poids.

5. Élément de palier lisse multicouche (1) selon la revendication 2, **caractérisé en ce que** la proportion d'antimoine au niveau de l'arête (9, 10) est supérieur d'au moins 5 % en poids à la proportion moyenne de cet élément dans la couche de glissement (4) et représente au maximum 40 % en poids.

6. Élément de palier lisse multicouche (1) selon la revendication 1, **caractérisé en ce que** le premier élément est le zinc et le deuxième élément est l'étain.

7. Élément de palier lisse multicouche (1) selon la revendication 6, **caractérisé en ce que** la proportion d'étain au niveau de l'arête (9, 10) est supérieur d'au moins 2 % en poids à la proportion moyenne de cet élément dans la couche de glissement (4).

8. Élément de palier lisse multicouche (1) selon la revendication 1, **caractérisé en ce que** le premier élément est l'argent et le deuxième élément est le plomb.

9. Élément de palier lisse multicouche (1) selon la revendication 8, **caractérisé en ce que** la proportion de plomb au niveau de l'arête (9, 10) est supérieur d'au moins 2 % en poids à la proportion moyenne de cet élément dans la couche de glissement (4) et représente au maximum 60 % en poids.

10. Élément de palier lisse multicouche (1) selon la revendication 1, **caractérisé en ce que** le premier élément est l'argent et le deuxième élément est le bismuth.

11. Élément de palier lisse multicouche (1) selon la revendication 10, **caractérisé en ce que** la proportion de bismuth au niveau de l'arête (9, 10) est supérieur d'au moins 2 % en poids à la proportion moyenne de cet élément dans la couche de glissement (4).

12. Élément de palier lisse multicouche (1) selon l'une des revendications 1 à 11, **caractérisé en ce que**, sur la couche de glissement (4), est disposée une couche supplémentaire (17) qui comprend une proportion du deuxième élément qui est inférieure à la proportion moyenne de cet élément dans la couche de glissement (4).

13. Procédé de fabrication d'un palier lisse multicouche (1) comprenant au moins une couche de support (3) et une couche de glissement (4), dans lequel la couche de glissement (4) comprend des arêtes (9, 10) s'étendant dans une direction circonférentielle (6) et présente une épaisseur de couche (14) dans la direction radiale, dans lequel en outre l'épaisseur de couche (14) de la couche de glissement (4) est, au niveau d'au moins une des arêtes (9, 10), inférieure à une épaisseur dans une zone proche des arêtes (9, 10), **caractérisé en ce que** la couche de glissement (4) est déposée galvaniquement sous la forme d'un alliage métallique avec un premier élément formant une matrice et au moins un deuxième élément provenant d'un bain galvanique et **en ce que** le deuxième élément est déposé avec un gradient de concentration s'étendant dans une direction axiale (8), avec une proportion croissante du deuxième élément dans l'alliage en direction de l'arête (9, 10), et dans lequel, en tant que deuxième élément, un élément avec un équivalent courant inférieur à celui du premier élément est utilisé et/ou dans lequel, en tant que deuxième élément, un élément est utilisé, qui, ou dont les phases intermétalliques présentent une densité supérieure à celle du premier élément.

14. Procédé selon la revendication 13, **caractérisé en ce que** le bain galvanique est déplacé, pendant le dépôt des éléments, avec un mouvement oscillant perpendiculaire à la surface à revêtir.

15. Procédé selon la revendication 14, **caractérisé en ce que** le mouvement oscillant est effectué avec une hauteur qui correspond à 0,1 à 3 fois 1 longueur souhaitée de la zone à épaisseur de couche réduite.

16. Procédé selon la revendication 14 ou 15, **caractérisé en ce que** le mouvement oscillant est effectué avec une fréquence supérieure à 0,5 Hz.

17. Procédé selon l'une des revendications 14 à 16, **caractérisé en ce que** plusieurs paliers lisses multicouches sont fabriqués simultanément dans un bain galvanique, dans lequel, entre les ébauches pour les paliers lisses multicouches, sont disposés des éléments d'écartement.
